# DEMANDE DE BREVET EUROPEEN

(11) **EP 3 885 795 A1**
(43) Date de publication de la demande: **29.09.2021**
(21) Numéro de dépôt: 21164072.7
(22) Date de dépôt: 22.03.2021
(51) Int. Cl.: G01S 13/91, H01Q 1/12, H01Q 3/08

(54) **SYSTÈME D'ACCROCHAGE ORIENTABLE D'UN ÉLÉMENT ÉLECTRIQUE MUNI D'UN COFFRE, TEL QU'UN RADAR, ET INSTALLATION D'UN TEL ÉLÉMENT ÉLECTRIQUE**

(30) Priorité: 23.03.2020 FR 2002810
(71) Demandeur: Mecano Soudure de l'Aron, 71170 Saint-Igny-de-Roche (FR)
(72) Inventeur: BARRAT, Yoann, 42190 CHARLIEU (FR); CHAMPION, Martial, 71170 CHAUFFAILLES (FR)
(74) Mandataire: Cabinet Laurent & Charras

(57) **Abrégé**

La présente invention concerne un système (2) d'accrochage orientable d'un élément électrique, tel qu'un coffre de radar (3), adaptable sur un support du type mât (5) ou paroi de mobilier urbain, par exemple un candélabre d'éclairage public, le système (2) comprenant : un dispositif de fixation (10) conçu pour fixer le système (2) au support, et une semelle (20) accouplée au dispositif de fixation (10) avec capacité de rotation autour d'un premier axe (A1) et prévue pour être fixée à l'élément électrique (3) avec capacité de rotation autour d'un deuxième axe (A2) incliné par rapport au premier axe (A1), autorisant le réglage en position de l'élément électrique (3) par rapport au support (4) avec deux degrés de liberté.

## Description

### Domaine technique

La présente invention concerne un système d'accrochage orientable d'un élément électrique muni d'un coffre, tel qu'un radar, un panneau de signalisation, un feu tricolore, ... L'invention concerne également une installation d'un tel élément électrique, comprend un tel système et un ledit élément fixé au système.

Le domaine de l'invention est par exemple celui des installations de radar, notamment radar routier.

### Art antérieur

De manière classique, un radar est monté sur un pied ou un mât assurant sa liaison au sol. Cependant, ces supports sont adaptés seulement aux d'installations de radar où un espace au sol est disponible à proximité de la route. D'autre part, les radars au sol sont vulnérables aux dégradations.

### Exposé de l'invention

Le but de la présente invention est de proposer un système d'accrochage amélioré, remédiant aux inconvénients ci-dessus.

A cet effet, l'invention a pour objet un système d'accrochage orientable d'un élément électrique muni d'un coffre, tel qu'un radar, adaptable sur un support du type mât ou paroi de mobilier urbain, par exemple un candélabre d'éclairage public, le système comprenant :
- un dispositif de fixation conçu pour fixer le système au support,
- une semelle accouplée au dispositif de fixation avec capacité de rotation autour d'un premier axe et prévue pour être fixée au coffre avec capacité de rotation autour d'un deuxième axe incliné par rapport au premier axe, autorisant le réglage en position du coffre par rapport au support avec deux degrés de liberté.

Ainsi, l'invention permet la fixation d'un élément électrique muni d'un coffre sur un support, de manière ferme, rigide et sécurisée, en particulier dans une position suspendue au-dessus de la route, tout en permettant son orientation par rapport au support et à la route.

Selon d'autres caractéristiques avantageuses de l'invention, prises isolément ou en combinaison :
- Le premier axe et le deuxième axe sont orthogonaux.
- Le premier axe et le deuxième axe sont perpendiculaires.
- La semelle comprend une platine parallèle au premier axe et destinée à être positionnée parallèlement au coffre de l'élément électrique.
- La semelle comprend deux brides parallèles entre elles et perpendiculaires au premier axe.
- La semelle comprend deux renforts disposés entre les deux brides.
- La semelle comprend des lumières oblongues assurant une capacité de rotation à ± 30 degrés autour du premier axe, relative au dispositif de fixation.
- Les lumières sont disposées en regard sur les brides.
- Les lumières s'étendent chacune sur un secteur angulaire à 60 degrés autour du premier axe.
- La semelle comprend des lumières oblongues assurant une capacité de rotation à ± 25 degrés autour du deuxième axe, relative au coffre de l'élément électrique.
- Les lumières sont réparties à 120 degrés autour du deuxième axe.
- Les lumières s'étendent chacune sur un secteur angulaire à 50 degrés autour du deuxième axe.
- Le dispositif de fixation comprend une demi-bague accouplée à la semelle avec capacité de rotation autour du premier axe.
- La demi-bague accouplée à la semelle comprend une noix de fixation creuse munie d'ouvertures de passage de câbles.
- La noix est munie d'ailettes de protection latérales.
- La demi-bague accouplée à la semelle comprend des inserts hexagonaux pour la réception de vis.
- Le dispositif de fixation comprend deux demi-bagues conçues pour être serrées autour d'un support en forme de mât, assurant le réglage en position du coffre de l'élément électrique par rapport au support avec un degré de liberté supplémentaire, à savoir une rotation à 360° autour du mât.
- Le dispositif de fixation comprend une unique demi-bague conçue pour être positionnée en appui contre un support en forme de paroi.
- Le système d'accrochage comprend un bras conçu pour être fixé au coffre et accouplé à la semelle avec capacité de rotation autour du deuxième axe.
- Le bras comprend un disque central destiné à recevoir la semelle.
- Le disque central comprend trois inserts hexagonaux pour la réception de vis lors de la fixation de la semelle au bras.
- Le bras comprend deux ailes allongées de part et d'autre du disque central.
- L'aile supérieure est plus courte l'aile inférieure.
- Les ailes comportent des lumières oblongues pour la fixation du coffre.
- Le système comprend un noyau creux pour la reprise des efforts de cisaillement entre la semelle et le bras, ainsi que pour le passage de câbles.
- Le dispositif de fixation, la semelle et le bras sont tous les trois en acier inoxydable. De préférence, les parties métalliques du système sont intégralement en acier inoxydable, y compris les inserts, les vis et le noyau creux.
- Le dispositif de fixation, la semelle et le bras sont mécano-soudés.
- Le système comprend un chemin entièrement clos de protection des câbles, du support jusqu'à l'élément électrique.
- Le système comprend des patins en matériau élastomère.
- Le système est apte à recevoir deux éléments électriques.

L'invention a également pour objet une installation d'un tel élément électrique, comprenant un système tel que mentionné ci-dessus et un élément électrique tel qu'un radar fixé au système.

L'invention a également pour objet un procédé de mise en œuvre d'un système tel que mentionné ci-dessus, caractérisé en ce qu'il comprend les étapes suivantes :
- une étape de montage consistant à fixer le dispositif de fixation au support et connecter le coffre de l'élément électrique à la semelle ; puis
- une étape de réglage consistant à positionner l'élément électrique par rapport à la route.

### Brève description des dessins

L'invention sera mieux comprise à la lecture de la description qui va suivre, donnée uniquement à titre d'exemple non limitatif et faite en référence aux dessins annexés sur lesquels :
[Fig. 1] est une vue en perspective d'une installation de radar conforme à l'invention, comprenant un coffre de radar fixé à un mât de mobilier urbain via un système d'accrochage orientable, également conforme à l'invention.
[Fig. 2] est une vue de côté de l'installation selon la flèche II à la figure 1.
[Fig. 3] est une vue de dessus de l'installation selon la flèche III à la figure 1.
[Fig. 4] est une vue de dessus analogue à la figure 3, à plus grande échelle, montrant principalement le système d'accrochage.
[Fig. 5] est une vue en perspective du système d'accrochage.
[Fig. 6] est une vue en perspective partielle du système d'accrochage, sans le bras, selon un angle de vue différent de la figure 5.
[Fig. 7] est une autre vue en perspective partielle selon la flèche VII à la figure 6.
[Fig. 8] est une autre vue en perspective partielle, avec une seule demi-bague du dispositif de fixation.
[Fig. 9] est une autre vue en perspective partielle, montrant seulement la demi-bague conçue pour être connectée à la semelle.
[Fig. 10] est une autre vue en perspective partielle, montrant seulement la semelle.
[Fig. 11] est une autre vue en perspective partielle, montrant seulement le bras.
[Fig. 12] est une vue en perspective analogue à la figure 1, montrant une installation de radar conforme à l'invention, avec une seule demi-bague du dispositif de fixation, fixée à une paroi de mobilier urbain ou en façade d'un bâtiment.
[Fig. 13] est une vue de dessus de l'installation selon la flèche XIII à la figure 12.
[Fig. 14] est une vue de dessus d'un mode de réalisation particulier du dispositif de fixation.
[Fig. 15] est une vue de dessus d'un autre mode de réalisation particulier du dispositif de fixation.

### Description détaillée de l'invention

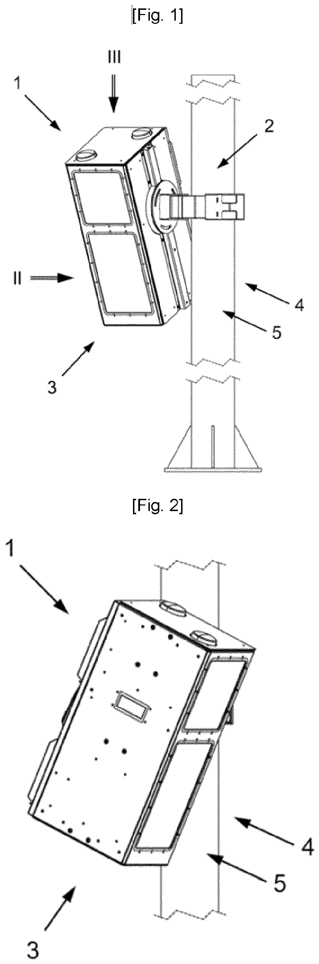

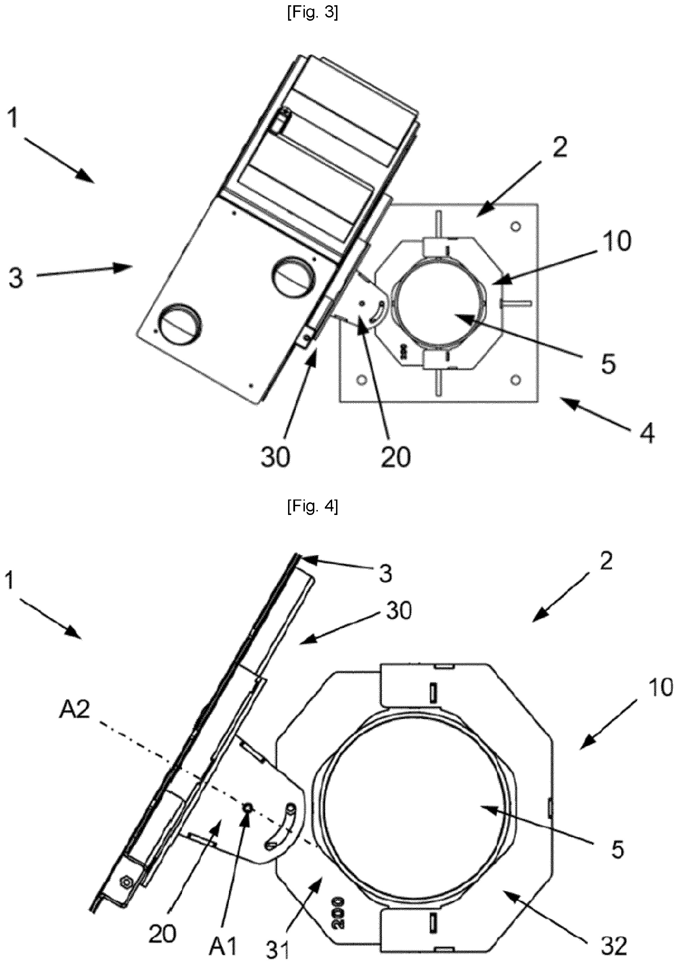

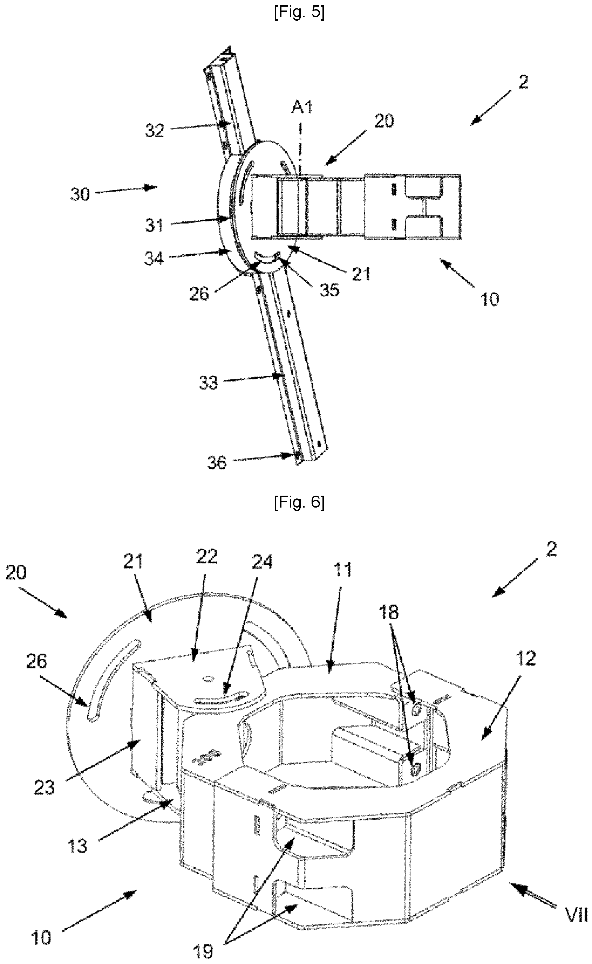

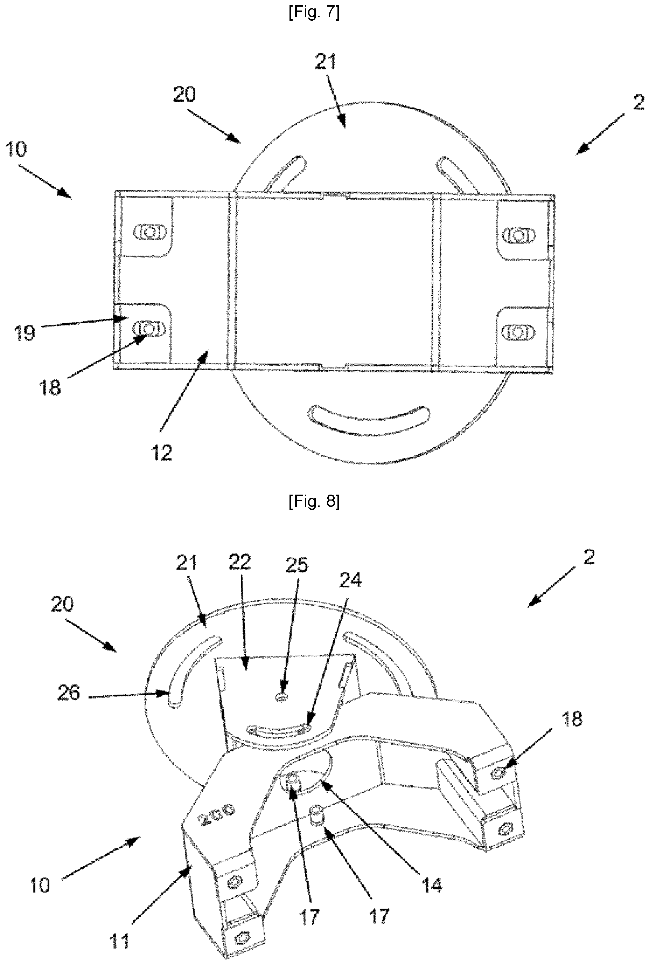

Les figures 1 à 9 montrent une installation de radar (1) conforme à l'invention, comprenant un système d'accrochage (2) et un coffre de radar (3) fixé au système (2).

Il est entendu que le système (2) objet de la présente invention est destiné à recevoir tout type d'élément électrique urbain équipé d'un coffre, tel qu'un feu tricolore, un radar, un panneau de signalisation équipé d'éclairage ou de flash, ou encore un panneau solaire destiné à alimenter un tel panneau. Pour faciliter la compréhension, il ne sera décrit que l'installation d'un radar, sans toutefois limiter la portée de protection à cette application.

Le système (2) est fixé à un support (4) du type mât (5) de mobilier urbain, par exemple un candélabre d'éclairage public. Le mât (5) a une forme cylindrique mais, en alternative, peut avoir une forme octogonale, conique, octo-conique, ou autre.

Le système (2) est conçu pour l'accrochage orientable du coffre (3) sur le mât (5), quel que soit sa forme, avec une grande polyvalence et une grande simplicité de mise en œuvre.

Le système (2) comprend un dispositif de fixation (10), une semelle (20), pouvant être fixée directement au coffre (3), et de préférence fixée au coffre par l'intermédiaire d'un bras (30).

Le dispositif de fixation (10) est conçu pour fixer le système (2) au mât (5). Le bras (30) est conçu pour fixer le système (2) au coffre (3). La semelle (20) est l'élément intermédiaire assurant deux degrés de liberté en rotation entre le coffre (3) et le mât (5), tandis que le dispositif (10) assure un troisième degré de liberté en rotation autour du mât (5).

La semelle (20) est accouplée au dispositif de fixation (10) par une liaison pivot de tout type approprié, de sorte qu'elle est fixée avec capacité de rotation autour d'un premier axe (A1). La semelle (20) est prévue pour être fixée au coffre (3) avec capacité de rotation autour d'un deuxième axe (A2) incliné par rapport au premier axe (A1). La semelle (20) permet le réglage en position du coffre (3) par rapport au support (4) avec deux degrés de liberté en rotation autour des axes (A1, A2).

Sur l'exemple des figures, les axes (A1, A2) sont perpendiculaires. L'axe (A1) est parallèle au mât (5) et à la face de fixation du coffre (3). L'axe (A2) est perpendiculaire au bras (30) et à la face de fixation du coffre (3).

En alternative, les axes (A1, A2) pourraient être orthogonaux, c'est-à-dire situés dans des plans perpendiculaires, mais sans que les axes (A1, A2) soient eux même sécants.

D'autres alternatives peuvent être envisagées.

La semelle (20) comprend une platine (21) de forme plane, parallèle au premier axe (A1) et destinée à être positionnée parallèlement à la face de fixation du coffre (2). La semelle (20) comprend deux brides (22) parallèles entre elles et au deuxième axe (A2). Les brides (22) sont perpendiculaires à la platine (21) et au premier axe (A1). La semelle (20) comprend deux renforts (23) disposés entre les deux brides (23), de part et d'autre.

La semelle (20) comprend deux lumières oblongues incurvées (24), disposées en regard sur les deux brides (22). Chaque lumière (24) définit un secteur angulaire à 60 degrés autour de l'axe (A1). La semelle (20) comprend deux orifices circulaires (25), disposés en regard sur les deux brides (22). Les lumières (24) et orifices (25) sont prévus pour recevoir des vis de serrage (14, 15) montées sur le dispositif (10). Les lumières (24) assurent une capacité de rotation à ± 30 degrés de la semelle (20) autour du premier axe (A1), par rapport au dispositif (10).

La semelle (20) comprend trois lumières oblongues incurvées (26) formées sur la platine (21) et réparties à 120 degrés autour de l'axe (A2). Chaque lumière (26) définit un secteur angulaire à 50 degrés autour de l'axe (A2). Les lumières (26) assurent une capacité de rotation à ± 25 degrés de la semelle (20) autour du deuxième axe (A2), par rapport au bras (30) et au coffre (3).

La semelle (20) comprend un orifice central (27) formé sur la platine (21). L'orifice (27) est destiné à recevoir un noyau creux (40) logé dans la platine (21) et le bras (30). Le noyau (40) est prévu pour la reprise des efforts de cisaillement entre la semelle (20) et le bras (30), ainsi que pour le passage de câbles.

Le dispositif de fixation (10) se présente sous forme de bague, comprenant deux demi-bagues (11, 12) conçues pour être serrées entre elles et autour du mât (5). Les demi-bagues (11, 12) sont creuses pour permettre le passage des câbles. Les demi-bagues (11, 12) peuvent s'adapter à une variation de diamètre du mât (5). Les demi-bagues (11, 12) permettent de régler la position du coffre (3) par rapport au mât (5), avec un degré de liberté en translation le long du mât et un degré de liberté en rotation à 360° autour du mât (5).

En outre, la demi-bague (11) est accouplée à la semelle (20) avec capacité de rotation autour de l'axe (A1), qui est parallèle au mât (5). La demi-bague (11) comprend une noix de serrage (13) conçue pour être montée entre les brides (22) de la semelle (20). La noix (13) est creuse, avec une partie cylindrique proéminente sur l'arrière de la demi-bague (11). La noix (13) est pourvue de deux ouvertures (14) de passage de câbles, sur l'avant et l'arrière. La noix (13) comporte deux ailettes verticales (15) disposées de part et d'autre de l'ouverture (14), sur la partie arrière cylindrique. Les ailettes (15) servent à obstruer le jeu engendré par la rotation et à protéger les câbles. La noix (13) comporte également quatre inserts hexagonaux (16), pour la réception de quatre vis de serrage (17). La forme creuse de la noix de serrage (13) sert à faire passer les câbles, tout en assurant la fixation entre la semelle (20) et le dispositif (10).

Les tiges des vis de serrage (17) sont logées respectivement dans les deux lumières (24) et les deux orifices (25) de la semelle (20), et vissées dans les inserts (16). Les vis (17) passant à travers les orifices (25) matérialisent l'axe (A1). Lorsque les vis (17) sont desserrées, un déplacement relatif en rotation entre la demi-bague (11) et la semelle (20) est possible. Lorsque les vis (117) sont serrées, la demi-bague (11) et la semelle (20) sont bloquées en position l'une par rapport à l'autre.

La demi-bague (11) comprend des inserts hexagonaux (18) pour la réception de vis (non représentées), permettant de solidariser la demi-bague (12) à la demi-bague (11), formant ainsi une bague de serrage complète autour du mât (5). La demi-bague (12) comprend des évidements (19), disposés en regard des inserts hexagonaux (18) lorsque les demi-bagues (11, 12) sont assemblées. Plus précisément, la demi-bague (11) comprend quatre inserts (18) et la demi-bague (12) comprend quatre évidements (19).

Chaque demi-bague (11, 12) a une forme en U, avec cinq pans inclinés de 45° les uns par rapport aux autres. Les pans centraux des demi-bagues (11, 12) sont parallèles. De même, les pans latéraux des demi-bagues (11, 12) sont parallèles. La demi-bague (12) a des dimensions légèrement supérieures à la demi-bague (11), de sorte que la demi-bague (11) peut être emboitées dans la demi-bague (12). Le recouvrement des deux demi-bagues (11, 12) permet de protéger les câbles traversant le dispositif (10) et les vis de serrage logées dans les inserts (18), contre une tentative de sciage.

De préférence, le système (2) comprend un chemin entièrement clos de protection des câbles du support (4) jusqu'au coffre (3), de sorte que les pièces composant le système (2) et destinées à recevoir des câbles comprennent chacune des cavités et des orifices permettant ce cheminement.

Lorsque le système (2) est installé et que le radar (3) est prêt à l'emploi, aucun des câbles n'est visible, de sorte à prévenir toute tentative de vandalisme.

Le bras (30) est conçu pour être fixé au coffre (2) et accouplé à la semelle (20) avec capacité de rotation autour du deuxième axe (A2), qui est perpendiculaire au premier axe (A1).

Le bras (30) comprend un disque central (31) et deux ailes (32, 33) allongées de part et d'autre du disque central (31).

Le disque central (31) est destiné à recevoir la platine (21) de la semelle (20). Le disque central (31) comprend un renfort cylindrique (34) formée en périphérie et solidaires des ailes (32, 33). Le disque central (31) comprend trois inserts hexagonaux (35) pour la réception de vis (non représentées) lors de la fixation de la semelle (20) au bras (30). Le disque central (31) est traversé par le noyau creux (40) pour la reprise des efforts de cisaillement et le passage de câbles.

L'aile supérieure (32) est plus courte l'aile inférieure (33), de manière à ce que le centre de gravité du coffre (3) coïncide avec la position du disque (31). Les ailes (32, 33) comportent des lumières oblongues (37) pour la fixation du coffre (2).

Toute la conception du système (2) a été dictée par un impératif de masquage des câbles. Aucun câble ne doit être visible pour ne pas être sectionné par un individu malintentionné. Le câble sort du mat (5) dans le dispositif (10) en forme de bague, chemine dans le creux de la demi-bague (11) si l'ouverture (14) n'est pas directement en face, traverse la noix (13) creuse pour passer dans la semelle (20), puis dans le noyau creux (40) et le bras (30) fixé au coffre (3).

Le système (2) est réalisé en métal ou en composite, assurant une bonne résistance mécanique et aux conditions climatiques.

De préférence, le système (2) est entièrement réalisé en acier inoxydable, pour la résistance à la corrosion. En particulier, le dispositif (10), la platine (20) et le bras (30) sont réalisés en acier inoxydable, par exemple 304L, par mécano-soudage. Encore de préférence, l'ensemble des inserts hexagonaux (16, 18, 34) et vis de serrage (17) sont en acier inoxydable.

En pratique, le coffre de radar (3) peut être orienté par rapport au mât (5) en trois temps :
1) Orientation de la bague (11+12) formée par le dispositif (10) autour du mât (5), avec un degré de liberté en rotation à 360°.
2) Orientation de la semelle (20) par rapport au dispositif (10), avec un degré de liberté en rotation à ± 30 degrés autour de l'axe (A1).
3) Orientation du bras (30) par rapport à la semelle (20), avec un degré de liberté en rotation à ± 25 degrés autour de l'axe (A2).

Ainsi, le coffre de radar (3) suspendu au mât (5) peut être position de manière pratique et précise par rapport à la route située en contrebas.

L'objectif des deux rotations autour des axes (A1, A2) est de pouvoir pointer le radar au bon endroit sur la chaussée, sans créer un angle de roulis qui n'est pas toléré par les systèmes de mesure du radar. Par conséquent le séquençage des rotations est important : rotation autour d'un axe vertical (A1) parallèle au mât, puis rotation autour d'un axe horizontal (A2) perpendiculaire au premier axe (A1) pour pointer vers le bas sans roulis.

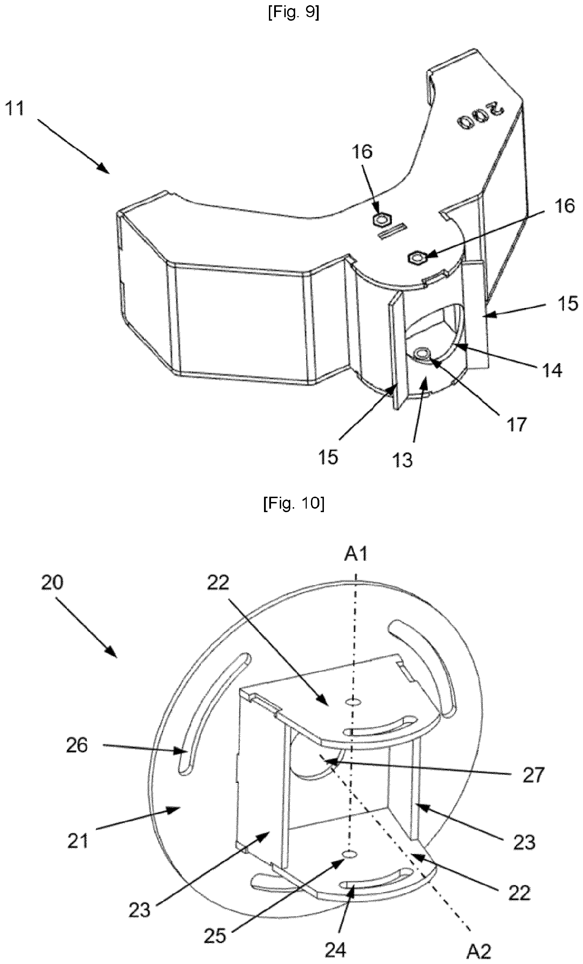

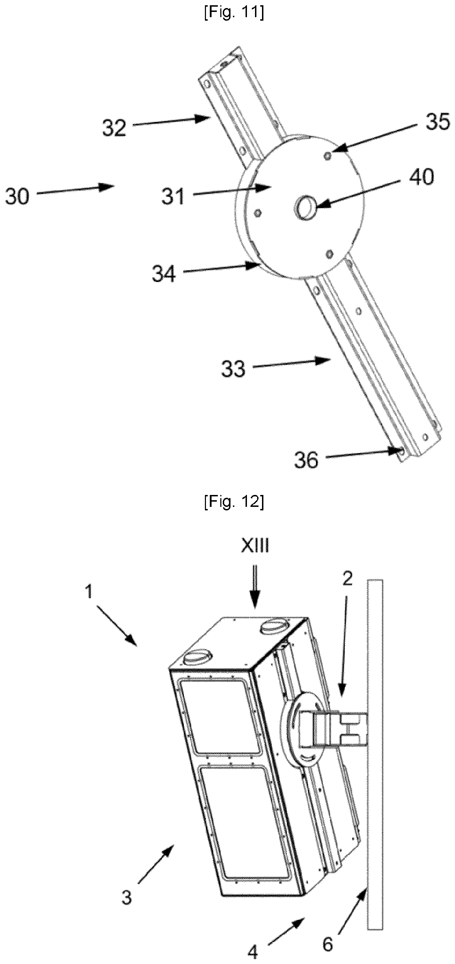

Les figures 10 et 11 montrent une installation de radar conforme à un deuxième de mode réalisation. Certains éléments constitutifs de cette installation sont comparables à ceux du premier mode de réalisation décrit plus haut et, dans un but de simplification, portent les mêmes références numériques.

Le support (4) est en forme de paroi (6) plane. En alternative, la paroi (6) pourrait présenter un profil incurvé ou plus complexe. La paroi (6) appartient à un mobilier urbain ou une façade de bâtiment.

Le dispositif de fixation (10) comprend une unique demi-bague (11) accouplée à la semelle (20) et conçue pour être positionnée en appui contre la paroi (6).

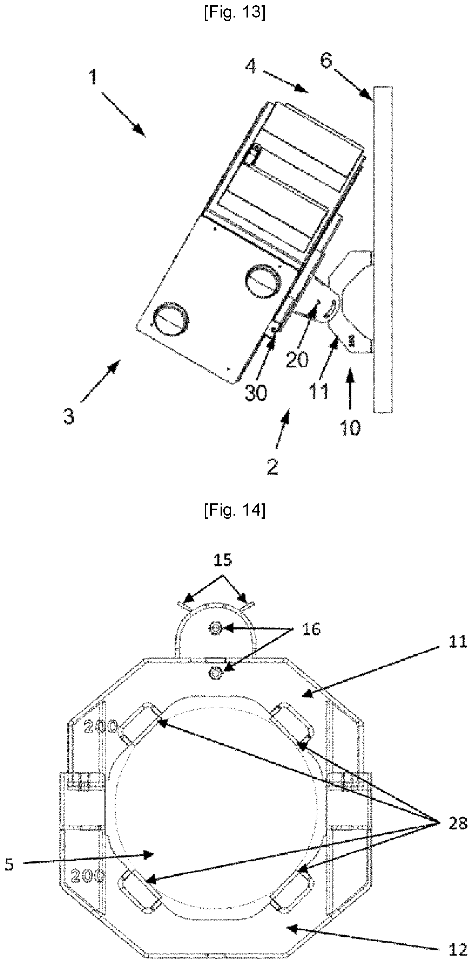

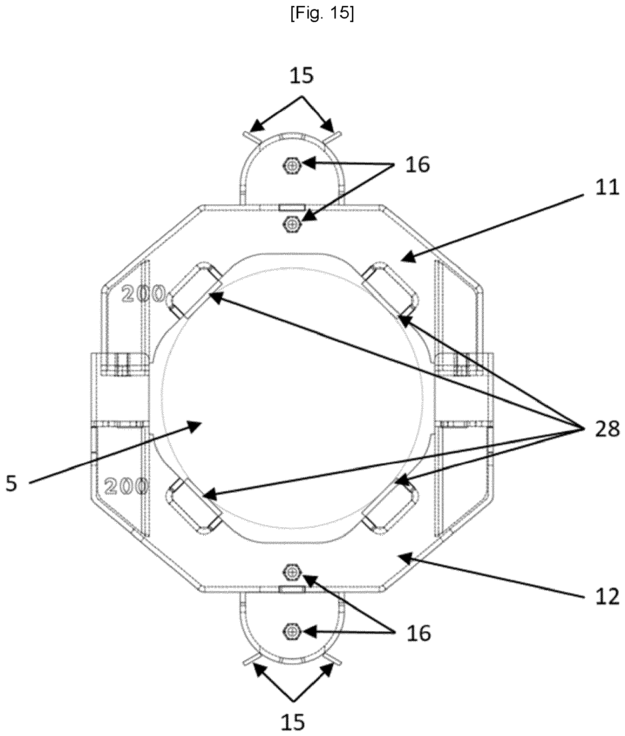

Dans certains modes de réalisation particuliers illustrés figures 14 et 15, le dispositif de fixation (10) comprend des patins (28) réalisés en matériau élastomère, tel que du caoutchouc. Ces patins sont de préférence reçus dans des évidements ménagés dans les demi-bagues (11, 12).

Ces patins (28) permettent d'augmenter le coefficient de friction entre le dispositif de fixation (10) et le mât (5). De cette manière, il est possible de limiter le couple de serrage des vis des demi-bagues (11, 12), afin d'éviter les déformations du mât (5).

Dans un mode de réalisation particulier illustré figure 15, la demi-bague (12) présente elle aussi les éléments structurels (15, 16) lui permettant de recevoir un élément électrique. De cette manière, le système (2) est équipé de deux éléments électriques. Il peut s'agir par exemple d'un radar (3) et d'une batterie destinée à l'alimenter et le rendre autonome, ou encore d'un radar (3) et d'un panneau solaire destiné à l'alimenter, ou encore de deux radars (3) orientés chacun vers une voie de circulation différente.

Par ailleurs, le système (2) peut être conformé différemment des figures 1 à 15 sans sortir du cadre de l'invention, qui est défini par les revendications.

Par exemple, selon une variante non représentée, le système (2) peut être dépourvu de bras (30), et la semelle (20) est fixée directement au coffre (3). Dans ce cas, la platine (21) peut avoir des dimensions plus importantes pour s'étendre sur une plus grande surface du coffre (3), et éviter la concentration de contraintes en partie centrale du coffre (3).

En outre, les caractéristiques techniques des différents modes de réalisation et variantes mentionnés ci-dessus peuvent être, en totalité ou pour certaines d'entre elles, combinées entre elles.

Ainsi, le système (2) peut être adapté en termes de coût, de fonctionnalités et de performance.

## Revendications

1. Système (2) d'accrochage orientable d'un élément électrique muni d'un coffre (3), tel qu'un radar, adaptable sur un support (4) du type mât (5) ou paroi (6) de mobilier urbain, par exemple un candélabre d'éclairage public, le système (2) comprenant :
- un dispositif de fixation (10) conçu pour fixer le système (2) au support (4),
- une semelle (20) accouplée au dispositif de fixation (10) avec capacité de rotation autour d'un premier axe (A1) et prévue pour être fixée au coffre (3) avec capacité de rotation autour d'un deuxième axe (A2) incliné par rapport au premier axe (A1), autorisant le réglage en position de l'élément électrique (3) par rapport au support (4) avec deux degrés de liberté.

2. Système (2) selon la revendication précédente, **caractérisé en ce que** le premier axe (A1) et le deuxième axe (A2) sont orthogonaux.

3. Système (2) selon l'une quelconque des revendications précédentes, **caractérisé en ce que** la semelle (20) comprend des lumières oblongues (24) assurant une capacité de rotation à ± 30 degrés autour du premier axe (A1), relative au dispositif de fixation (10).

4. Système (2) selon l'une quelconque des revendications précédentes, **caractérisé en ce que** la semelle (20) comprend des lumières oblongues (26) assurant une capacité de rotation à ± 25 degrés autour du deuxième axe (A2), relative au coffre (3).

5. Système (2) selon l'une quelconque des revendications précédentes, **caractérisé en ce que** le dispositif de fixation (10) comprend une demi-bague (11) accouplée à la semelle (20) avec capacité de rotation autour du premier axe (A1).

6. Système (2) selon l'une quelconque la revendication 5, **caractérisé en ce que** la demi-bague (11) accouplée à la semelle (20) comprend des inserts hexagonaux (18) pour la réception de vis.

7. Système (2) selon l'une quelconque des revendications 5 ou 6, **caractérisé en ce que** le dispositif de fixation (10) comprend deux demi-bagues (11, 12) conçues pour être serrées autour d'un support (4) en forme de mât (5), assurant le réglage en position de l'élément électrique (3) par rapport au support (4) avec un degré de liberté supplémentaire, à savoir une rotation à 360° autour du mât (5).

8. Système (2) selon l'une quelconque des revendications 5 ou 6, **caractérisé en ce que** le dispositif de fixation (10) comprend une unique demi-bague (11) conçue pour être positionnée en appui contre un support (4) en forme de paroi (6).

9. Système (2) selon l'une quelconque des revendications précédentes, **caractérisé en ce qu'**il comprend un bras (30) conçu pour être fixé au coffre (3) de l'élément électrique et accouplé à la semelle (20) avec capacité de rotation autour du deuxième axe (A2).

10. Installation de radar, comprenant un système (2) selon l'une des revendications 1 à 9 et un élément électrique muni d'un coffre (3) fixé au système (2).
